# EUROPEAN PATENT APPLICATION

(11) **EP 3 002 109 A1**
(43) Date of publication of application: **06.04.2016**
(21) Application number: 15187941.8
(22) Date of filing: 01.10.2015
(51) Int. Cl.: B29C 67/00, G01N 25/72, G01N 21/88, B33Y 50/02

(54) **THREE DIMENSIONAL PRINTING INSPECTION APPARATUS AND METHOD**

(30) Priority: 03.10.2014 US 201462059409 P; 30.09.2015 US 201514870364
(71) Applicant: Tyco Electronics Corporation, Berwyn, PA 19312 (US)
(72) Inventor: Fry, Charles David, New Bloomfield, PA Pennsylvania 17068 (US); Eldeeb, Yasser M., Harrisburg, PA Pennsylvania 17111 (US)
(74) Representative: Johnstone, Douglas Ian

(57) **Abstract**

A three-dimensional printing apparatus and method for inspecting an article (62) during fabrication of the article (62). A material depositing device (16) deposits layers (64) of material to form a three-dimensional article (62). A build device (60) receives the material deposited by the material depositing device (16). An inspection device (72) is positioned proximate the build device (60) and captures images of each respective layer (64) of the article (62) as the article (62) is formed. A controller (70) compares the images of each respective layer (64) to a digital template to determine if the article (62) is properly constructed. The article (62) is inspected during the manufacture of the article with no need for destructive inspection.

## Description

The present invention is directed to an apparatus and method for the inspection of three-dimensional articles printed using additive manufacturing technology. In particular, the invention is directed to an apparatus and method for inspecting three-dimensional articles formed using additive manufacturing technology which does not require destructive testing of the article.

It is common in plastic parts manufacturing to produce large batch sizes and serial parts by injection molding or extrusion. The advantage of plastic injection molding is, in particular, owing to the highly accurate production of complex part geometries whereby the functionality of the injection molding process optimally satisfies the requirements for the cost-effective and economical production of plastic parts.

However, the need for individual units and small batch sizes of plastic parts, with or without the requirement of being supplied within a short time frame and with properties similar to those of injection molding parts, is continuing to grow. Manufacturing processes exist for the production of such parts which are widely known under the term "prototyping." The production of such parts is generally based on the generation of the geometry from three-dimensional data. These geometries are produced in a variety of forms by using the corresponding material, such as meltable layers of powder by heat input, e.g. with lasers, by generative systems such as printing processes, in various combinations of powder parts and using the "melt strand" process.

Various three-dimensional printing devices are currently available to produce parts from such three-dimensional data. Three-dimensional (3D) printing refers to processes that create three-dimensional articles based on digital three-dimensional article models and a materials dispenser. In three-dimensional printing, a dispenser moves in at least 2-dimensions and dispenses material accordance to a determined print pattern. To build a three-dimensional article, a platform that holds the article being printed is adjusted such that the dispenser is able to apply many layers of material. In other words, a three-dimensional article may be printed by printing many layers of material, one layer at a time. If the dispenser moves in 3-dimensions, movement of the platform is not needed. Three-dimensional printing features such as speed, accuracy, color options and cost vary for different dispensing mechanisms and materials.

As many different parameters must be properly controlled during the three-dimensional printing process, inspection of the parts which are fabricated is an important portion of the quality control process. In particular, determining if the internal components or features of the parts are important. Unlike traditional molding processes which have controlled mold cavities, each part manufactured by a three-dimensional printing process may vary if the control parameters are varied. As these changes are often not perceptible upon viewing the finished part, inspection must be performed on the parts to make certain the parts are within appropriate standards.

Inspection of parts made using a three-dimensional printing process is done manually. The inspection of the internal structures and components is currently done by destructive process. One such process currently available slices the fabricated part in very fine slices while taking pictures. The pictures are combined with the slice thickness to form a set of data points or a point cloud. The sections are ultimately combined to form a three-dimensional model of the part. The model is then compared to the specifications or digital template for the desired part to determine if the part has been properly fabricated.

It would be beneficial to provide an inspection apparatus and method in which the parts manufactured by additive manufacturing, including but not limited to, the three-dimensional printing process or selective laser sintering, could be inspected without the need to destroy the part. In particular, it would be beneficial to have a quality control process or inspection process which would monitor the deposition of the layers of material during the fabrication of the part and compare the results with the desired digital template or specifications.

The solution is provided by a three-dimensional printing apparatus as disclosed herein which includes a material depositing device, a build device, an inspection device and a controller. The material depositing device deposits layers of material to form a three-dimensional article. The build device receives the material deposited by the material depositing device. The inspection device is positioned proximate the build device and captures images of each respective layer of the article as the article is formed. The controller compares the images of each respective layer to a digital template to determine if the article is properly constructed.

The invention will now be described by way of example with reference to the accompanying drawings in which:
FIG. 1 is a perspective view of an illustrative three-dimensional printing apparatus which includes an inspection device according to the present invention.
FIG. 2 is a schematic view of an illustrative print head and build device with two inspection devices positioned proximate thereto.
FIG. 3 is a schematic view of an illustrative movable print head and build device with an inspection device positioned proximate thereto.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the preferred embodiments. Accordingly, the invention expressly should not be limited to such preferred embodiments illustrating some possible non-limiting combination of features that may exist alone or in other combinations of features, the scope of the invention being defined by the claims appended hereto.

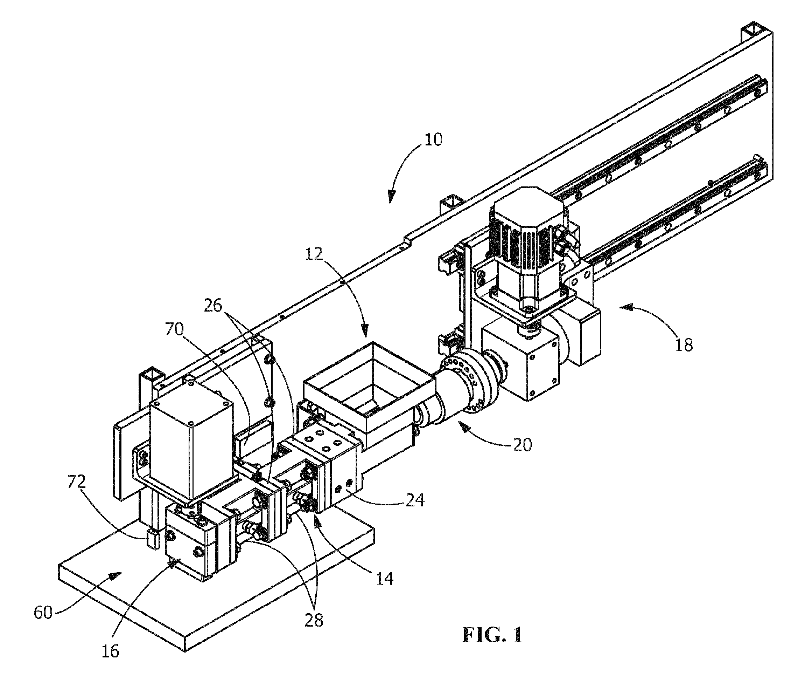

Referring to FIG. 1, an illustrative three-dimensional printing apparatus 10 is shown. Although the three-dimensional printing apparatus 10 is shown, other additive manufacturing technology apparatus can be used without departing from the scope of the invention which is directed to a system and method for inspecting parts or articles fabricated using additive manufacturing technology, such as, but not limited to, three-dimensional printing or selective laser sintering. In the illustrative embodiment shown, the three-dimensional printing apparatus 10 includes a material receiving area or hopper 12, a plasticizer 14 and a material depositing device, discharge pump or print head 16, such as, but not limited to, a print head or discharge pump. In general, the three-dimensional printing apparatus 10 is configured to allow a wide range of materials to be used to produce a three-dimensional article, such as, but not limited to, polymers, which may include, but are not limited to, filled polymers in the form of pellets or other ground forms. The materials can also include regrind. Any number of other materials can be used provided they are dischargeable by the discharge pump 16.

While only one three-dimensional printing apparatus 10 is shown, other similar three-dimensional printing apparatus 10 may be added and used in parallel to either increase production rates or provide additional material types such as support materials or other colors.

The three-dimensional printing apparatus 10 include a motor and drive train transmission 18, a chuck 20, an auger, the hopper 12, an unheated or cold zone 24, insulators 26, heating zones or cartridges 28, and a discharge pump 16 which includes a nozzle 30. In the embodiment shown, the unheated section 24, the insulators 26, and the heating zones or cartridges 28 form the plasticizer 14. A more detailed description of the three-dimensional printing apparatus 10 is provide in copending US Patent Application Serial Number 62/059,380, filed on October 3, 2014, which is hereby incorporate by reference in its entirety.

The material is moved through the three-dimensional printing apparatus 10 to the discharge pump 16. The discharge pump 16 is attached to or integral with the nozzle 30. The discharge pump 16 is a constant or controlled flow rate pump which is used to feed the nozzle(s) 30. In one embodiment, the discharge pump 16 may be a small gear pump. However, while a gear pump is effective in maintaining the pressure and the flow of the material, gear pumps suffer from inconsistent performance characteristics during the start and stop functions.

In another embodiment, the discharge pump 16 may be a syringe style pump. A syringe style pump maintains a constant flow rate independent of the back pressure. In order to have continuous flow, a dual syringe system can be used where the second syringe is filling while the first is extruding. Alternatively, one syringe might be used to meter the required amount for a single pass and then the second used as the extrusion syringe.

In another embodiment, the discharge pump 16 may be a precision screw pump. This plasticizer can feed the precision screw pump and this can be used to create the positive pressure and flow rates.

In the embodiment shown, a build device or build plate 60 is positioned proximate the material depositing device 16, which in the illustrative embodiment shown is a discharge pump or print head, and is moved in the X-Y-Z direction according to the part or article to be fabricated. In other three-dimensional printing apparatus, the print head 16 may be moved, or a combination of the print head 16 and a build plate 60 may be moved, to provide the desired movements in the X-Y-Z direction. Alternatively, the three-dimensional printing apparatus may have alternate build devices, such as, but not limited to, the build device or build rod as described in US Patent Application Serial Number 62/059,396, filed on October 3, 2014, which is hereby incorporate by reference in its entirety. The movement of the build plate, build rod and/or print head 16 is controlled by a controller 70.

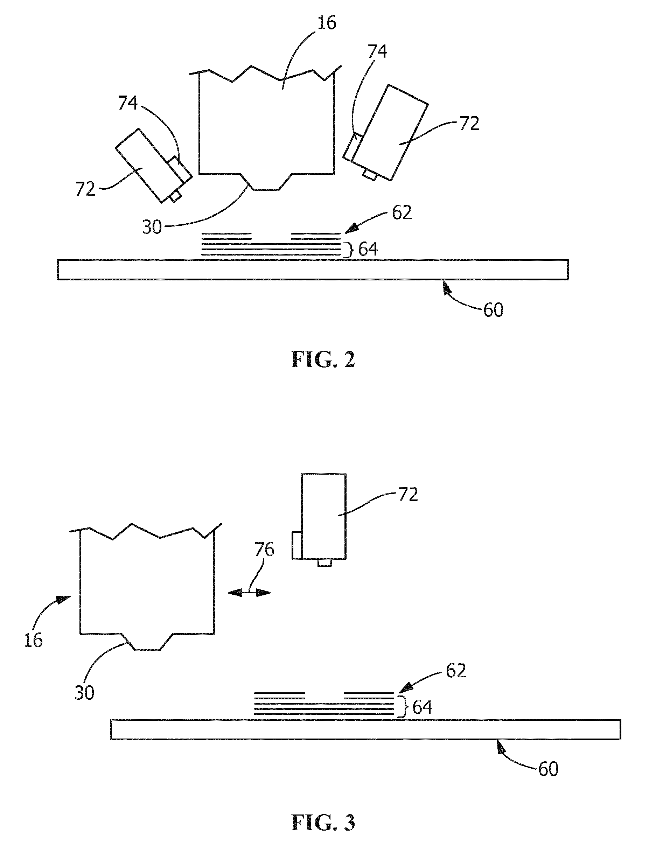

As best shown in FIGS. 2 and 3, one or more inspection devices 72 are positioned proximate to the build device 60 and the nozzle 30 of the print head 16. The inspection devices 72 may be, but are not limited to, optical devices (for example, cameras), thermal imaging devices or other devices which are able to detect characteristics of the printed layers 64 as they are deposited. In various illustrative embodiments, illumination sources 74 may be provided for illuminating the printed layers as they are deposited. The inspection devices 72 are positioned to capture images of the printed layers as they are deposited. One or more inspection devices 72 may be used depending upon the size and complexity of the printed layers and the articles or parts 62 to be fabricated. The positioning of the inspection devices 72 relative to the print head 16 and nozzle 30 may vary depending on the configuration of the print head 16 and the article or part 62 to be fabricated. In addition, the positioning of the inspection devices 72 relative to the build device 60 may vary depending on the configuration of the build device 60 and the article or part 62 to be fabricated.

As the thickness of each printed layer is controlled by the three-dimensional printing process, the images captured by the inspection devices 72 can be compiled by the controller 70 and formed into a set of data points or a point cloud that represents the actual part or article 62 fabricated from the three-dimensional printing apparatus. The inspection devices 72 may communicate with the controller 70 wirelessly or via fixed connections, such as, but not limited to, wires or circuit paths.

The inspection devices 72 captures data or a point cloud for each and every deposited layer for each article or part 62 fabricated in the three-dimensional printing apparatus. The data or point cloud is compiled and analyzed by the controller 70 to determine if the layers of the fabricated part or article 62 have any defects which require the part or article 62 to be discarded. The controller 70 compares the digital images gathered by the inspection devices 72 to the specification or the desired digital template of the part or article 62 to ensure that proper quality control is maintained. No destructive testing is required.

The information acquired from the inspection devices 72 can be used by the controller 70 to control the three-dimensional printing process and improve the quality of the part or article 62 by adjusting the flow of the material in the three-dimensional printing apparatus, the layer to layer registration, the registration between different materials, as well as other parameters of the process. Additionally, information acquired from the inspection devices 72 can be used by the controller 70 to identify if an error or defect, such as, but not limited to warping, on a part or article 62 has occurred during the printing process, allowing the printing process to be stopped, saving both print time and material.

The inspection devices 72 may also include thermal imaging devices. Thermal imaging allows for the detection of hot and cold spots to be indentified within the part or article 62 being fabricated or built.

The information acquired from the inspection devices 72 can be used by the controller 70 to make appropriate corrections to the process. For example, the information acquired can be used to prevent warping of the printed layers 64 and the part or article 62. If a part or article 62 warps during printing, the current printed layer 64 will not be identical or match the underlying layers. As the inspection device 72 records each layer 64, the controller 70 will analyze the information and determine if warping has occurred. If warping is detected, the controller 70 can then stop the printing process, allowing the faulty part 62 or layers 64 to be removed. The controller 70 can also adjust the printing process to correct the process to ensure that future layers 64 and parts 62 are properly printed.

While the acquired information from the inspection devices 72 can be used by the controller 70 to detected various errors or defects in the printing process, it is not limited to defects related to warping. For example, if a part or article 62 is pulled loose from the build plate, the controller 70 would analyze the data collected by the inspection devices 72 to determine that the part or article 62 was missing or in the wrong position. Upon detection or any error or defect, the controller 70 can stop the three-dimensional printing process, allowing the faulty or bad part or article 62 to be removed. Upon removal of the part or article 62, the controller 70 can make any appropriate corrections required and the printing process can continue without damage to other parts.

In the illustrative embodiment shown in FIG. 3, a camera 72 is placed above the three-dimensional print head. After each printed layer 64 is completed, the print head retracts, as indicated by arrow 76, long enough for the camera to image the entire print area. The print area contains all of the deposited printed layers 64. The controller 70 is used to separate the new layer from the pre-existing material. This is then combined with the layer thickness information from the three-dimensional printer to form a three-dimensional point cloud of the part or article 62. When the print is finished, the point cloud can be assembled into a full three-dimensional model and compared to the digital check print or specification.

Two or more cameras can be used to build a stereo image to build a better three-dimensional image of the printed layers 64. As each layer 64 has a vertical profile, a dual or multiple camera system could properly detect the profile.

The use of inspection devices positioned proximate the build device allows the inspection of each deposited layer and each fabricated part or article without the need for destructive testing or analysis. In addition, as the inspection devices are integral with the printing apparatus, detection of error or defects can be determined as the part or article is being fabricated. This allows fabrication of the defect part or article to be immediately discarded, thereby greatly reducing the amount of scrap material while increasing the overall quality of the fabricated parts or articles.

While the invention has been described with reference to a preferred embodiment, it will be understood by those skilled in the art that various changes may be made and equivalents may be substituted for elements thereof without departing from the scope of the invention as defined in the accompanying claims. In particular, it will be clear to those skilled in the art that the present invention may be embodied in other specific forms, structures, arrangements, proportions, sizes, and with other elements, materials, and components, without departing from the scope of the claims. One skilled in the art will appreciate that the invention may be used with many modifications of structure, arrangement, proportions, sizes, materials, and components and otherwise, used in the practice of the invention, which are particularly adapted to specific environments and operative requirements without departing from the scope of the claims. The presently disclosed embodiments are therefore to be considered in all respects as illustrative and not restrictive, the scope of the invention being defined by the appended claims, and not limited to the foregoing description or embodiments.

## Claims

1. A three-dimensional printing inspection apparatus (10) comprising:
a print head (16) for depositing layers of material to form a three-dimensional article (62);
a build device (60) for receiving the material deposited by the print head (16);
an inspection device (72) positioned proximate the build device (60), the inspection device (72) configured to capture images of each respective layer (64) of the article (62) as the article (62) is formed;
a controller (70) configured to compare the images of each respective layer (64) to a digital template to determine if the article (62) is properly constructed.

2. The apparatus (10) as recited in claim 1, wherein the inspection device (72) is a device which captures optical images.

3. The apparatus (10) as recited in claim 1, wherein the inspection device (72) is a device which captures thermal images.

4. The apparatus (10) as recited in any preceding claim, wherein more than one inspection device (72) is provided proximate the build device (60).

5. A method of inspecting an article (62) made in layers (64), the method comprising:
positioning an inspection device (72) proximate to layers (64) of the article (62);
capturing digital images each layer (64) of the article (62) immediately following the completion of each layer (64);
sending the digital images to a controller (70);
comparing the digital images of the article (62) to a digital template to determine if the article (62) is properly constructed;
whereby the article (62) is inspected during the manufacture of the article (62) with no need for destructive inspection.

6. The method as recited in claim 5, further comprising:
compiling the digital images into a three-dimensional model.

7. The method as recited in claim 5 or 6, further comprising:
retracting the inspection device (72) from proximate the layers (64) of the article (62) when the layers (64) are being deposited by a print head (16).

8. The method as recited in any of claims 5 to 7, further comprising:
retracting a print head (16) from proximate the layers (64) of the article (62) after each respective layer (64) has been deposited to allow the inspection device (72) to capture the digital image of each respective layer (64).

9. The method as recited in any of claims 5 to 8, further comprising:
stopping the manufacture of the article (62) if the digital images are not consistent with the digital template.

10. The method as recited in any of claims 5 to 9, further comprising:
adjusting the manufacture of the article (62) if the digital images are not consistent with the digital template.

11. The method as recited in any of claims 5 to 10, wherein the digital images are optical images.

12. The method as recited in any of claims 5 to 10, wherein the digital images are thermal images.

13. The method as recited in any of claims 5 to 12, wherein plural inspection devices (72) are provided proximate to layers (64) of the article (62).
